# FASCICULE DE BREVET EUROPEEN

(11) **EP 3 453 438 B1**
(45) Date de publication et mention de la délivrance du brevet: **18.03.2020**
(21) Numéro de dépôt: 18191614.9
(22) Date de dépôt: 30.08.2018
(51) Int. Cl.: A63H 27/00, A63H 27/133

(54) **DRONE À VOILURE TOURNANTE COMPRENANT UNE STRUCTURE DE DRONE PLIABLE**
DROHNE MIT DREHFLÜGELN, DIE EINE FALTBARE DROHNENSTRUKTUR UMFASST
ROTARY-WING DRONE COMPRISING A FOLDABLE DRONE STRUCTURE

(30) Priorité: 07.09.2017 FR 1758270
(43) Date de publication de la demande: 13.03.2019
(73) Titulaire: Parrot Drones, 75010 Paris (FR)
(72) Inventeur: CAUBEL, Christine, 18100 VIERZON (FR)
(74) Mandataire: Lavoix

(56) Documents cités:
- WO-A1-2016/148784
- WO-A1-2017/121038
- WO-A1-2017/143501
- CN-A- 104 691 749
- CN-A- 105 947 202
- CN-A- 106 184 704
- US-A1- 2015 298 799

## Description

La présente invention concerne le domaine des drones à voilure tournante comprenant une structure de drone pliable.

Un drone à voilure tournante comprend une structure de drone et au moins un rotor pour assurer la sustentation verticale de la structure de drone, chaque rotor étant porté par la structure de drone.

Afin de faciliter le transport d'un drone à voilure tournante, il est possible de prévoir une structure de drone pliable, pouvant passer d'une configuration dépliée prévue pour le vol du drone, à une configuration pliée prévue pour le transport et dans laquelle la structure de drone est plus compacte.

WO 2017/121038 divulgue un tel drone ayant une structure de drone pliable.

Une telle structure de drone comprend par exemple un corps de drone et plusieurs bras articulés sur la structure de drone. Chaque bras peut par exemple porter un rotor respectif de la voilure tournante.

Le document WO-A1-2017/143501 divulgue un drone à voilure tournante comprenant un rotor porté par une structure de drone, la structure de drone comprenant un corps de drone et deux groupes de bras chaque groupe de bras comprenant plusieurs bras montés mobiles en rotation sur le corps de drone, entre une position dépliée pour le vol et une position pliée pour le transport.

Cependant, une structure de drone pliable peut s'avérer plus lourde qu'une structure de drone non pliable, du fait par exemple de la présence des articulations de la structure pliable. L'augmentation du poids de la structure de drone peut affecter la dynamique de vol du drone et/ou son autonomie en vol.

Un des buts de l'invention est de proposer un drone à voilure tournante possédant une structure de drone pliable qui puisse présenter un poids contenu.

A cet effet, l'invention propose un drone à voilure tournant selon la revendication 1.

La prévision d'un groupe de bras comprenant plusieurs bras montés mobile en rotation sur le corps du drone autour d'un même axe de rotation peut permettre aux bras de partager un système d'articulation commun, ce qui permet de réduire le nombre de système d'articulation et le poids de la structure de drone. En outre, le corps de drone peut être configuré avec un nombre limité d'emplacements pour la réception de systèmes d'articulation, ce qui limite le poids du corps de drone en lui-même.

Des caractéristiques optionnelles sont définies aux revendications 2 à 13 .

L'invention et ses avantages seront mieux compris à la lecture de la description qui va suivre, donnée uniquement à titre d'exemple non limitatif, et faite en référence aux dessins annexés, sur lesquels :
- les Figures 1 et 2 sont des vues en perspective d'un drone possédant une structure de drone pliable, la structure de drone étant respectivement en configuration dépliée et en configuration pliée ;
- les Figures 3 et 4 sont des vues en perspective, respectivement assemblée et éclatée, d'un système d'articulation commun aux bras d'un groupe de bras.

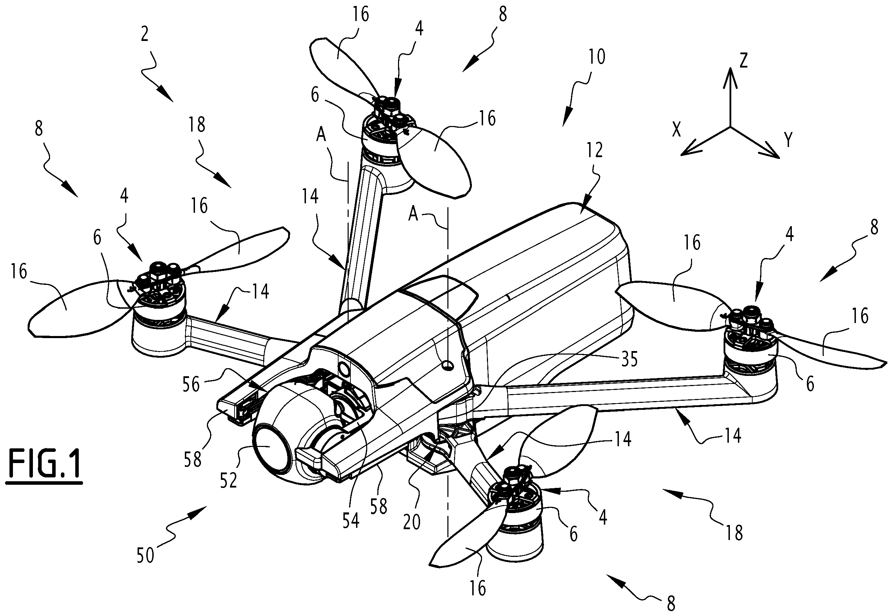

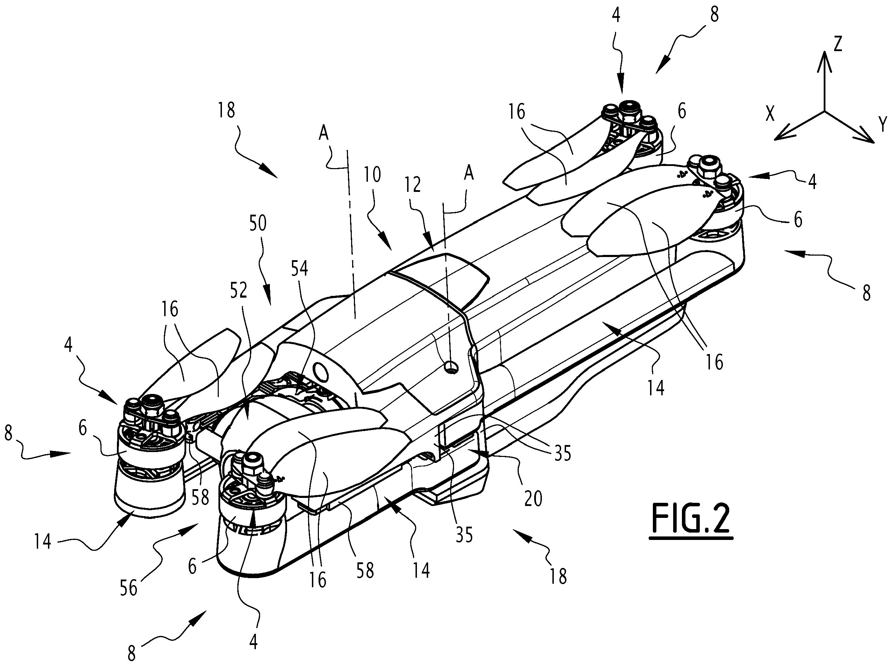

Dans la suite de la description, les termes « longitudinal », « transversal », « horizontal », « vertical », « haut », « bas », « avant », « arrière », « droite » et « gauche » s'étendent par référence au repère usuel des aéronefs illustré sur les Figures 1 et 2, et comprenant un axe longitudinal X (ou axe de roulis), horizontal et dirigé de l'arrière vers l'avant, un axe transversal Y (ou axe de tangage), horizontal et dirigé de la droite vers la gauche, et un axe vertical Z (ou axe de lacet), vertical et dirigé du bas vers le haut.

Le drone 2 illustré sur les Figures 1 et 2 est un drone à voilure tournante. Le drone 2 comprend au moins un rotor (ou hélice) 4 configuré pour assurer la sustentation verticale du drone 2.

Le drone 2 comprend par exemple plusieurs rotors 4. Un tel drone est nommé « multirotor ». Le drone 2 comprend ici exactement quatre rotors 4. Un tel drone est nommé « quadrirotor ». Le drone 2 pourrait en variante comprend un nombre de rotor différent.

Le drone 2 comprend au moins un moteur 6 pour l'entrainement en rotation de chaque rotor. Le drone 2 comprend ici un moteur respectif associé à chaque rotor. Chaque rotor 4 et le moteur 6 associé forment un ensemble de rotor motorisé 8.

Le drone 2 comprend une structure de drone 10. Chaque rotor 4 est porté par la structure de drone 10. Plus spécifiquement ici, chaque ensemble de rotor motorisé 8 est porté par la structure de drone 10.

Le drone 2 comprend également des équipements électroniques embarqués qui sont également portés par la structure de drone 10, et qui ne sont pas visibles sur les figures. Les équipements électroniques embarqués comprennent par exemple un dispositif de radiocommunication, un récepteur de géolocalisation par satellite et/ou une centrale inertielle, qui permettent le pilotage manuel, assisté et/ou automatique du drone.

La structure de drone 10 est pliable. Elle peut adopter une configuration dépliée (Figure 1), qui est une configuration de vol du drone, et une configuration pliée (Figure 2), qui est une configuration de transport du drone.

La structure de drone 10 comprend un corps de drone 12 et des bras 14 pliables. Chaque bras 14 est monté mobile en rotation sur le corps de drone 12 entre une position dépliée (Figure 1) et une position pliée (Figure 2).

Chaque bras 14 passe d'une position parmi la position dépliée et de la position pliée à l'autre par rotation du bras 14 par rapport au corps de drone 12 autour d'un axe de rotation A.

La position dépliée de chaque bras 14 correspond à la configuration dépliée de la structure de drone 10, et la position pliée de chaque bras 14 correspond à la configuration pliée de la structure de drone 10.

Chaque bras 14 est ici écarté du corps de drone 12 en position dépliée du bras 14, et rabattu contre le corps de drone 12 en position pliée.

Chaque bras 14 possède une extrémité proximale articulée sur le corps de drone 12 et une extrémité distale libre. Chaque bras 14 est monté en porte à faux sur le corps de drone 12 à partir de son extrémité proximale articulée sur le corps de drone 12.

L'extrémité distale de chaque bras 14 porte par exemple un rotor 4 respectif. L'extrémité distale de chaque bras 14 porte ici un ensemble de rotor motorisé 8 respectif.

En variante ou en option, les extrémités distales des bras 14 définissent des pieds d'appui permettant de poser le drone 2 sur une surface horizontale, en appui par l'intermédiaire de ces pieds.

En option, comme illustré sur la Figure 2, les pales 16 de chaque rotor 4 sont pliables pour faciliter le transport du drone 2 en configuration pliée.

Les bras 14 sont regroupés en au moins un groupe de bras 18, ici deux groupes de bras 18, chaque groupe de bras 18 incluant plusieurs des bras 14 de la structure de drone 10, les bras 14 de chaque groupe de bras 18 étant montés mobiles en rotation sur le corps de drone 12 autour d'un même et unique axe de rotation A. Tous les bras 14 d'un même groupe de bras 18 partage le même et unique axe de rotation A pour leur rotation par rapport au corps de drone 12.

Les bras 14 de chaque groupe de bras 18 sont pivotants l'un par rapport à l'autre.

En particulier, l'écartement entre les bras 14 de chaque groupe de bras 18 est différent dans la position pliée et dans la position dépliée.

Avantageusement, au moins deux bras 14 de chaque groupe de bras 18 sont propres à passer de la position parmi la position dépliée et de la position pliée à l'autre par rotation du bras 14 par rapport au corps de drone 12 autour de l'axe de rotation A selon un sens de rotation différent.

Lorsque la structure de drone 10 comprend plusieurs groupes de bras 18 distincts, chaque groupe de bras 18 possède un axe de rotation A respectif, distinct de celui des autres groupes de bras 18.

L'axe de rotation A des bras 14 de chaque groupe de bras 18 est ici sensiblement vertical.

Chaque groupe de bras 18 comprend par exemple exactement deux bras 14. Ainsi, chaque groupe de bras 18 est une paire de bras 14 montés mobiles en rotation sur le corps de drone 12 autour d'un même et unique axe de rotation A.

La structure de drone 10 comprend par exemple deux groupes de bras 18 agencés de manière symétrique par rapport à un plan longitudinal médian P de la structure de drone 10. Le plan longitudinal médian P est le plan contenant l'axe longitudinal X et l'axe vertical Y du drone. Les deux groupes de bras 18 sont disposés latéralement sur un côté du drone 4.

La structure de drone 10 comprend ici quatre bras 14 regroupés en deux groupes de bras 18 (ou paires de bras 18), chaque groupe de bras 18 possédant un axe de rotation A commun pour les deux bras 14 de ce groupe de bras 18, distinct de l'axe de rotation A des bras 14 de l'autre groupe de bras 18, les deux groupes de bras 18 étant agencés symétriquement par rapport au plan longitudinal médian.

Les bras 14 de chaque groupe de bras 18 sont montés mobiles en rotation sur le corps de drone 12 par l'intermédiaire d'un système d'articulation 20 du groupe de bras 18, commun à tous les bras 14 de ce groupe de bras 18.

L'extrémité proximale de chaque bras 14 est articulée sur le corps de drone 12 par l'intermédiaire du système d'articulation 20 du groupe de bras 18 auquel appartient ce bras 14.

Chaque groupe de bras 18 possède son propre système d'articulation 20 respectif pour le montage à rotation des bras 14 de ce groupe de bras 18 sur le corps de drone 12. Les systèmes d'articulation 20 des différents groupes de bras 18 sont analogues.

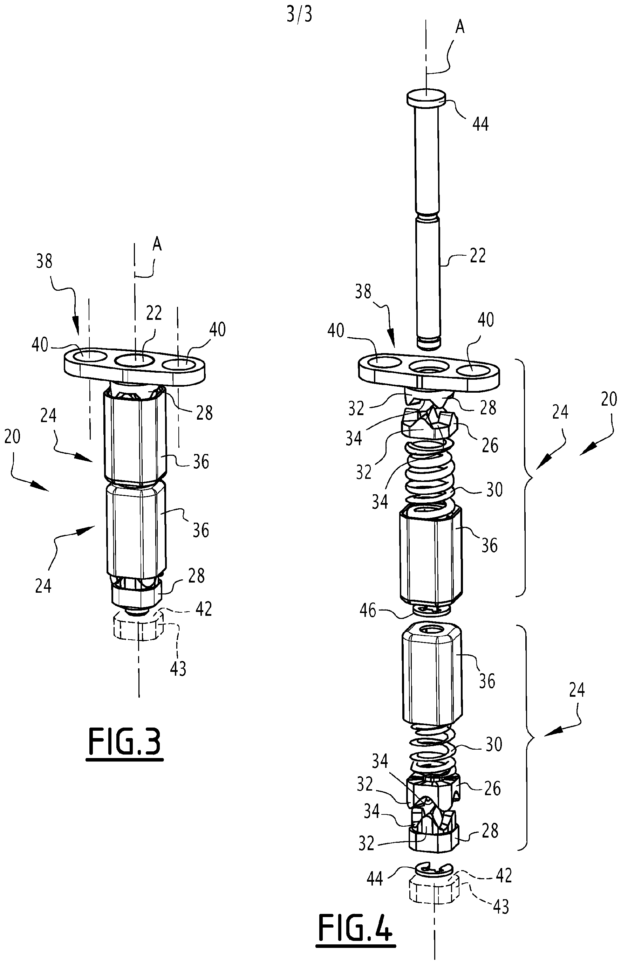

Les Figures 3 et 4 illustrent un système d'articulation 20 d'un groupe de bras 18, par l'intermédiaire duquel les bras 14 de ce groupe de bras 18 sont montés mobiles en rotation sur le corps de drone 12.

Le système d'articulation 20 comprend un arbre d'articulation 22 s'étendant suivant l'axe de rotation des bras 14 du groupe de bras 18, chaque bras 14 du groupe de bras 18 étant monté rotatif sur l'arbre. L'arbre d'articulation 22 est commun aux bras 14 du groupe de bras 18.

Le système d'articulation 20 comprend un ensemble d'articulation 24 associé à chaque bras 14, l'ensemble d'articulation 24 étant configuré pour guider le bras 14 en rotation autour de l'axe de rotation, et pour verrouiller le bras 14 sélectivement dans la position dépliée ou dans la position pliée.

Chaque ensemble d'articulation 24 est configuré pour autoriser le déplacement manuel du bras 14 associé entre la position dépliée et la position pliée de ce bras 14, avec un point dur entre la position dépliée et la position pliée.

Chaque ensemble d'articulation 24 comprend un premier organe de verrouillage 26 et un deuxième organe de verrouillage 28 configurés pour être mis en prise l'un avec l'autre pour verrouiller le bras 14 sélectivement dans la position dépliée ou dans la position pliée du bras 14, et pour se dégager l'un de l'autre pour permettre la rotation du bras 14 entre la position pliée et la position dépliée.

Lorsque le premier organe de verrouillage 26 et le deuxième organe de verrouillage 28 sont en prise l'un avec l'autre, ils s'opposent à la rotation du bras 14 entre la position dépliée et la position pliée du bras 14.

Lorsque le premier organe de verrouillage 26 et le deuxième organe de verrouillage 28 sont dégagés l'un de l'autre, ils autorisent la rotation du bras 14 entre la position dépliée et la position pliée.

Le premier organe de verrouillage 26 et le deuxième organe de verrouillage 28 sont montés mobiles axialement l'un par rapport à l'autre le long de l'axe de rotation A du bras 14, pour sélectivement venir en prise en se rapprochant axialement, ou se dégager l'un de l'autre en s'écarter axialement.

Dans l'exemple illustré, le premier organe de verrouillage 26 est mobile axialement le long de l'axe de rotation A, et le deuxième organe de verrouillage 28 est fixe axialement le long de l'axe de rotation A.

Le premier organe de verrouillage 26 et le deuxième organe de verrouillage 28 sont montés rotatifs l'un par rapport à l'autre autour de l'axe de rotation A du bras 14 pour permettre la rotation du bras 14 autour de l'axe de rotation lorsque le premier organe de verrouillage 26 et le deuxième organe de verrouillage 28 sont dégagés l'un de l'autre.

Dans l'exemple illustré, le premier organe de verrouillage 26 est mobile en rotation autour de l'axe de rotation A, et le deuxième organe de verrouillage 28 est fixe en rotation autour de l'axe de rotation A. Le premier organe de verrouillage 26 est solidaire en rotation du bras 14 associé à l'ensemble d'articulation 24.

L'ensemble d'articulation 24 comprend un organe de rappel 30 configuré pour solliciter le premier organe de verrouillage 26 et le deuxième organe de verrouillage 28 en prise l'un avec l'autre.

L'organe de rappel 30 est configuré pour s'opposer au dégagement du premier organe de verrouillage 26 et du deuxième organe de verrouillage 28 l'un de l'autre. Le premier organe de verrouillage 26 et le deuxième organe de verrouillage 28 se dégagent l'un de l'autre à l'encontre de l'action de l'organe de rappel 30.

L'organe de rappel 30 est un organe de rappel élastique. Il est agencé pour solliciter en permanence le premier organe de verrouillage 26 et le deuxième organe de verrouillage 28 en prise l'un avec l'autre.

L'organe de rappel 30 est ici un ressort hélicoïdal agencé pour pousser le premier organe de verrouillage 26 axialement vers le deuxième organe de verrouillage 28, suivant l'axe de rotation A.

L'ensemble d'articulation 24 est configuré de sorte que la rotation forcée du bras 14 entre la position dépliée et la position pliée provoque le dégagement du premier organe de verrouillage 26 et du deuxième organe de verrouillage 28 à l'encontre de l'organe de rappel 30.

L'organe de rappel 30 génère donc un couple résistant s'opposant à la rotation du bras 14 et devant être vaincu pour déplacer le bras 14 entre la position pliée et la position dépliée.

Dans l'exemple illustré, le premier organe de verrouillage 26 et le deuxième organe de verrouillage 28 sont munis de surfaces de contact respectives obliques par rapport à un plan perpendiculaire à l'axe de rotation A.

Les surfaces de contact obliques incluent des premières surfaces de contact venant en contact lors de la rotation du bras 14 vers la position dépliée, et des deuxièmes surfaces de contact venant en contact lors de la rotation du bras 14 vers la position pliée.

Les surfaces de contact obliques sont inclinées de sorte que, lors de la rotation forcée du bras 14 vers la position dépliée ou vers la position pliée, les surfaces de contact obliques venant en contact provoquent l'écartement axial du premier organe de verrouillage 26 et du deuxième organe de verrouillage 28 à l'encontre de l'organe de rappel 30 jusqu'au désengagement.

Ceci permet de déplacer le bras 14 entre la position pliée et la position dépliée, avec un point dur entre les deux positions.

Dans un exemple de réalisation, au moins un parmi le premier organe de verrouillage 26 et le deuxième organe de verrouillage 28 est muni d'au moins une dent 32, l'autre comprenant au moins deux crans 34, chaque dent 32 passant d'un cran 34 à un autre cran 34 lors de la rotation du bras 14 entre la position dépliée et la position pliée du bras 14.

Chaque surface de contact oblique est une face latérale d'une dent 32 ou d'un cran 34.

En option, chaque ensemble d'articulation 24 est configuré de sorte que, dans la position dépliée et/ou dans la position pliée, chaque bras 14 est préchargé en rotation contre une butée de rotation ménagée sur le corps de drone, du fait de l'action de l'organe de rappel 30. Ceci limite les vibrations du bras 14 en position dépliée ou en position pliée.

Dans le cas présent, lorsque le bras 14 est en position dépliée, le premier organe de verrouillage 26 et le deuxième organe de verrouillage 28 sont en contact par des surfaces de contact obliques inclinées de sorte que le bras 14 est sollicité en appui contre une butée de rotation correspondante sous l'action de l'organe de rappel 30.

En variante ou en option, lorsque le bras 14 est en position dépliée, le premier organe de verrouillage 26 et le deuxième organe de verrouillage 28 sont en contact par des surfaces de contact obliques inclinées de sorte que le bras 14 est sollicité en appui contre une butée de rotation correspondante sous l'action de l'organe de rappel 30.

Chaque butée de rotation est par exemple formée sur le corps de drone 12. Sur la Figure 1, une butée de rotation 35 pour le blocage en position dépliée d'un bras 14 est visible. Sur la Figure 2, cette butée de rotation 35 et la butée de rotation 35 pour le blocage en position dépliée de l'autre bras 14 du même groupe de bras 18 sont visibles.

Dans l'exemple illustré, le premier organe de verrouillage 26 et le deuxième organe de verrouillage 28 sont chacun munis de plusieurs dents 32 délimitant entre elles des crans 34, chaque cran 34 de l'un étant propre à recevoir une dent 32 de l'autre.

Les dents 32 et les crans 34 de chacun du premier organe de verrouillage 26 et du deuxième organe de verrouillage 28 sont répartis circonférentiellement autour de l'axe de rotation A.

Les dents 32 de chacun du premier organe de verrouillage 26 et du deuxième organe de verrouillage 28 sont décalées d'un angle supérieur à l'angle de rotation du bras 14 entre la position dépliée et la position pliée.

Ceci assure qu'en position dépliée et/ou en position pliée, chaque dent 32 et le cran 34 recevant la dent 32 sont en appui via leurs faces latérales obliques pour assurer la précharge du bras 14 contre une butée de blocage en rotation associée.

Le premier organe de verrouillage 26 et le deuxième organe de verrouillage 28 comprennent ici chacun quatre dents 32 réparties à 90° et délimitant entre elles quatre crans 34 répartis à 90°. L'angle de rotation de chaque bras 14 entre la position pliée et la position dépliée est par exemple compris entre 45° et 80°.

Lors de la rotation du bras 14 entre la position dépliée et la position pliée, chaque dent 32 de premier organe de verrouillage 26 passe d'un cran 34 du deuxième organe de verrouillage 28 au cran 34 adjacent en passant par-dessus la dent 32 du deuxième organe de verrouillage 28 située entre ces deux crans 34.

Dans l'exemple illustré, le deuxième organe de verrouillage 28 est monté fixe sur le corps de drone 12, et le premier organe de verrouillage 26 est monté solidaire du bras 14 en rotation autour de l'axe de rotation A.

L'organe de rappel 30 est agencé pour pousser le premier organe de verrouillage 26 axialement le long de l'axe de rotation A pour le maintenir en prise avec le premier organe de verrouillage 26.

Chaque ensemble d'articulation 24 comprend ici une douille 36 tubulaire montée à rotation sur le corps de drone 12 autour de l'axe de rotation, le premier organe de verrouillage 26 étant monté coulissant à l'intérieur de la douille 36 en étant solidaire en rotation de la douille 36, l'organe de rappel 30 étant logé à l'intérieur de la douille 36 axialement entre un épaulement interne de la douille 36 et le premier organe de verrouillage 26, de manière à pousser le premier organe de verrouillage 26 vers le deuxième organe de verrouillage 28.

Dans l'exemple illustré, la douille 36 et le premier organe de verrouillage 26 possèdent respectivement une surface interne et une surface externe coopérant de manière à lier en rotation la douille 36 et le premier organe de verrouillage 26 autour de l'axe de rotation A.

La surface interne et la surface externe présentent par exemple chacune au moins une facette plane pour assurer la liaison en rotation. La surface interne et la surface externe sont ici carrés (avec des coins arrondis) et complémentaires.

Dans l'exemple illustré, la douille 36 est distincte du bras 14, le bras 14 étant monté sur la douille 36, le bras 14 et la douille 36 étant solidaires en rotation autour de l'axe de rotation.

Pour ce faire, le bras 14 possède par exemple un logement pour recevoir la douille 36, le logement et la douille 36 possédant respectivement une surface interne et une surface externe coopérant pour lier en rotation le bras 14 et la douille 36.

La surface interne et la surface externe présentent par exemple chacune au moins une facette plane pour assurer la liaison en rotation. La surface externe de la douille 36 est ici carrée (avec des coins arrondis). Le logement du bras 14 peut présenter une surface interne carrée (avec des coins arrondis) complémentaire.

Dans une variante, la douille 36 et le bras 14 sont réalisés intégralement en une seule pièce de matière. La douille 36 constitue une extrémité proximale du bras 14 articulée sur le corps de drone 12 par le système d'articulation 20.

Le deuxième organe de verrouillage 28 de chaque ensemble d'articulation 24 est monté fixe sur le corps de drone 12.

Dans l'exemple illustré, sur les Figures 3 et 4, le deuxième organe de verrouillage 28 de l'un des deux ensembles d'articulation 24 comprend une embase de fixation 38 possédant des orifices 40 pour son vissage sur le corps de drone 12.

Le deuxième organe de verrouillage 28 de l'autre ensemble d'articulation 24 est prévu pour être logé dans une cavité 42 d'une pièce de fixation 43 fixée sur le corps de drone 12, en étant bloqué en rotation dans cette cavité 42.

La pièce de fixation 43 est prévue de sorte que le deuxième organe de verrouillage 28 est en appui radial contre un côté de la cavité 42, afin de précharger l'organe de rappel 30.

Ce deuxième organe de verrouillage 28 et la cavité 42 possèdent respectivement une surface externe et une surface interne coopérant pour maintenir le deuxième organe de verrouillage 28 fixe en rotation par rapport au corps de drone 12. Ce deuxième organe de verrouillage 28 présente ici une surface externe carrée (aux coins arrondis).

Chaque ensemble d'articulation 24 est enfilé sur l'arbre d'articulation 22 du système d'articulation 20. L'arbre d'articulation 22 est engagé à travers chaque ensemble d'articulation 24. L'arbre d'articulation s'étend à travers le premier organe de verrouillage 26, le deuxième organe de verrouillage 28 et la douille 36 de chaque ensemble d'articulation 24. Dans le cas présent, il s'étend également à l'intérieur de l'organe de rappel 30 de chaque ensemble d'articulation 24, prévu sous la forme d'un ressort hélicoïdal.

Dans l'exemple illustré sur les Figures 3 et 4, la douille 36 et le premier organe de verrouillage 26 assurent le guidage en rotation du bras 14 sur l'arbre d'articulation 22 autour de l'axe de rotation A, le premier organe de verrouillage 26 coopérant en outre avec le deuxième organe de verrouillage 28 sous l'effet de l'organe de rappel 30 pour le blocage en rotation du bras 14 sélectivement dans la position dépliée ou la position pliée.

Chaque ensemble d'articulation 24 est reçu sur un tronçon respectif de l'arbre d'articulation 22.

Dans l'exemple illustré, l'arbre d'articulation 22 est pourvu de butées axiales 44, 46, chaque ensemble d'articulation 24 étant disposé axialement sur un tronçon délimité entre deux butées axiales 44, 46.

Chaque ensemble d'articulation 24 a sa douille 36 en butée contre une butée axiale 46 et son deuxième organe de verrouillage 28 en butée contre une autre butée axiale 44, le premier organe de verrouillage 26 coulissant axialement le long de l'arbre et dans la douille 36 pour venir en prise avec ou se dégager du deuxième organe de verrouillage 28.

L'arbre d'articulation 22 est muni de trois butées axiales comprenant deux butées axiales 44 d'extrémité et une butée axiale 46 intermédiaire, chaque ensemble d'articulation 24 étant disposé entre la butée axiale 46 intermédiaire et une des deux butées axiales 44 d'extrémité.

Une butée axiale, ici la butée axiale 44 d'extrémité située du côté du premier organe de verrouillage 28 munie de l'embase 38, est formée par une collerette de l'arbre d'articulation 22 formée intégralement d'une seule pièce de matière avec l'arbre d'articulation 22, et les deux autres butées axiales 44, 46 sont rapportées et montées sur l'arbre d'articulation 22, ici chacune dans une gorge ménagée sur l'arbre d'articulation 22.

En fonctionnement, pour passer chaque bras 14 de la position dépliée à la position pliée, l'utilisateur force manuellement sur le bras 14 pour le faire pivoter. Ce faisant le bras 14 force le premier organe de verrouillage 26 en rotation autour de l'axe de rotation. Le premier organe de verrouillage tend à se dégager du premier organe en s'écartant axialement de celui-ci pour permettre à chaque dent 32 de sortir d'un cran 34 dans lequel elle était engagée. Le premier organe de verrouillage 26 se déplace axialement à l'encontre de l'organe de rappel 30 élastique. Lorsque chaque dent 32 e retrouve en regard du cran 34 suivant, le premier organe de verrouillage 26 revient en prise avec le deuxième organe de verrouillage 28, et le bras 14 est à nouveau verrouillé, en position pliée cette fois-ci.

Pour passer de la position pliée à la position dépliée, l'utilisateur agit de la même façon en forçant manuellement le bras 14 à pivoter par rapport au corps de drone 12, mais en sens inverse.

En revenant aux Figures 1 et 2, le corps de drone 12 est configuré pour le montage d'une charge utile sur le corps de drone 12.

La charge utile est par exemple montée à demeure sur le corps de drone 12. En variante, le corps de drone 12 est muni d'un dispositif de montage (non visible) permettant un montage et un démontage rapide de la charge utile. Le dispositif de montage est par exemple du type par vissage d'une bague de montage ou à baïonnette.

Comme illustré sur les Figures 1 et 2, la charge utile est par exemple un système de capture d'image 50 comprenant un dispositif de capture d'image 52, en particulier une caméra.

Le système de capture d'image 50 comprend ici un dispositif d'orientation 54 permettant de commander l'orientation du dispositif de capture d'image 52 par rapport au corps de drone 12.

Le dispositif d'orientation 54 permet ici l'orientation par rotation autour de deux axes d'orientation perpendiculaires entre eux, à savoir l'axe longitudinal X et l'axe transversale Y. En variante, il permet l'orientation autour de trois axes d'orientation perpendiculaires entres eux, qui sont par exemple l'axe longitudinal X, l'axe transversal Y et l'axe vertical Z.

Le corps de drone 12 possède un espace de réception 56 pour la réception de la charge utile. L'espace de réception 56 est situé à une extrémité du corps de drone 12 suivant l'axe longitudinal X, ici l'extrémité avant du corps de drone 12.

En option, et comme illustré sur les Figures 1 et 2, le corps de drone 12 possède deux extensions longitudinales 58 s'étendant en saillie, latéralement de part et d'autre de l'espace de réception 56. Les extensions longitudinales 58 s'étendent ici en saillie vers l'avant.

De telles extensions longitudinales 58 permettent de protéger et/ou de maintenir la charge utile latéralement, sans entraver le champ de vision du dispositif de capture d'image 52 lorsque la charge utile est un système de capture d'image 50.

En position pliée, deux bras 14, chacun appartenant à un groupe de bras 18 respectif, s'étendent longitudinalement en se plaçant latéralement de part et d'autre de l'espace de réception 56. Les deux bras 14 en position pliée s'étendent de part et d'autre du corps de drone 12 symétriquement par rapport au plan longitudinal médian P.

Ainsi, en position pliée, ces deux bras 14 du drone protègent la charge utile reçue dans l'espace de réception 56, en se plaçant latéralement de part et d'autre de l'espace de réception 56 et donc de la charge utile.

Ces deux bras 14 en position pliée s'étendent sensiblement parallèlement l'un avec l'autre, suivant l'axe longitudinal X.

En outre, en option, les extrémités distales de ces deux bras 14 ferment en partie l'espace de réception 56 longitudinalement. L'espace de réception 56 est ainsi situé longitudinalement entre le corps de drone 12 et l'extrémité distale de chacun des deux bras 14 encadrant l'espace de réception 56.

En option, au moins un des deux bras 14 encadrant l'espace de réception 56 possède un organe de calage configuré pour caler la charge utile dans une position de transport lorsque le bras 14 est en position pliée.

En particulier, lorsque la charge utile comprend un dispositif d'orientation 54, le calage de la charge utile permet d'éviter des mouvements incontrôlés de la charge utile qui pourraient l'endommager.

Ainsi, en position pliée des bras 14, la charge utile est entourée par le corps de drone 12 et par les bras 14, et protégée par ceux-ci. Il en résulte qu'il est possible de limiter les risques de dommage sur la charge utile pendant le transport du drone 2 en configuration pliée.

Dans l'exemple illustré, chaque groupe de bras 18 comprend un bras 14 avant et un bras 14 arrière.

L'espace de réception 56 est ici situé à l'extrémité longitudinale avant du corps de drone 12 et les bras 14 avant en position pliée encadrent l'espace de réception 56.

En position pliée, les extrémités libres des bras 14 arrière, en particulier les ensembles de rotor motorisés 8 portés par ces extrémités libres, se placent derrière le corps de drone 12. Ceci permet un rangement compact.

Dans l'exemple illustré, le bras avant 14 de chaque groupe de bras 18 s'étend longitudinalement vers l'avant du corps de drone 12 à partir de son extrémité proximale lorsqu'il est en position pliée, et le bras 14 arrière de chaque groupe de bras 18 s'étend longitudinalement vers l'arrière du corps de drone 12 à partir de son extrémité proximale lorsqu'il est en position pliée.

A partir de la position dépliée des bras 14, chaque bras 14 avant se plie en se rabattant vers l'avant du corps de drone 12, alors que chaque bras 14 arrière se plie en se rabattant vers l'arrière du corps de drone 12.

Cet agencement permet d'obtenir un drone qui est particulièrement compact en configuration pliée de transport, comme illustré sur la Figure 2.

Le drone 2 comprenant une structure de drone 10 pliante possédant des groupes de bras 18 dont les bras 14 sont montés rotatifs sur le corps de drone 12 autour d'un même axe de rotation, permet aux bras 14 de chaque groupe de bras 18 de partager un système d'articulation 20 commun, et notamment un arbre d'articulation 22 commun. Ceci permet de limiter le poids du drone 2, ce qui est favorable aux performances de vol du drone, à son autonomie en vol et/ou à sa facilité de transport.

Chaque système d'articulation 20 assure un verrouillage simple et fiable de chaque bras 14 monté rotatif sur le corps de drone 12 par l'intermédiaire de ce système d'articulation 20, dans une position dépliée pour le vol et une position pliée pour le transport.

Des bras 14 de la structure de drone 10 pliante sont utilisés avantageusement pour protéger et/ou caler une charge utile emportée par le drone 2, en particulier un système de capture d'image 50 comprenant un dispositif de capture d'image 52 orientable par rapport au corps de drone 12, lorsque ces bras 14 sont en position pliée.

L'utilisation de bras 14 pliables pour la protection d'un espace de réception 56 d'une charge utile montée sur le drone 2, telle que système de capture d'image 50, est avantageuse indépendamment du montage de bras 14 d'un même groupe de bras 18 à rotation autour d'un même et unique axe de rotation A.

Ainsi, de manière générale, l'invention concerne également un drone à voilure tournante comprenant au moins un rotor 4 et une structure de drone 10, chaque rotor étant porté par la structure de drone 10, la structure de drone 10 comprenant un corps de drone 12 et une pluralité de bras 14, chaque bras 14 étant monté mobile sur le corps de drone 12 entre une position dépliée de vol et une position pliée de transport, le corps de drone 12 possédant un espace de réception 56 d'une charge utile, deux bras 14 étant configurés pour s'étendre de part et d'autre de l'espace de réception 56 en position pliée de ces deux bras 14, de manière à encadrer latéralement l'espace de réception entre eux.

En option, les extrémités distales de ces deux bras 14 sont configurées pour fermer longitudinalement l'espace de réception 56 en position pliée de ces deux bras 14, de sorte que l'espace de réception 56 est situé entre longitudinalement les extrémités distales des deux bras 14 et le corps de drone 12.

De même, la configuration de pliage vers l'avant et vers l'arrière des bras 14 de chaque groupe de bras 18 est avantageuse indépendamment de l'articulation des bras 14 sur le corps de drone 12 autour d'un même axe de rotation.

Ainsi, de manière générale, l'invention concerne également un drone à voilure tournante comprenant au moins un rotor 4 et une structure de drone 10 portant chaque rotor, la structure de drone 10 comprenant un corps de drone 12 et deux groupes de bras 18 disposés latéralement de part et d'autre du drone, chaque bras 14 étant monté mobile sur le corps de drone 12 entre une position dépliée dans laquelle le bras 14 est écarté du corps de drone 12 et une position pliée dans laquelle le bras 14 est rabattu contre le corps de drone 12, chaque groupe de bras 18 comprenant un bras 14 se pliant en se rabattant vers l'avant, et un bras 14 se pliant en se rabattant vers l'arrière.

## Revendications

1. Drone à voilure tournante comprenant au moins un rotor porté par une structure de drone (10), la structure de drone (10) comprenant un corps de drone (12) et au moins deux groupes de bras (18), chaque groupe de bras (18) comprenant plusieurs bras (14) montés mobiles en rotation sur le corps de drone (12) autour d'un même axe de rotation (A), entre une position dépliée pour le vol et une position pliée pour le transport,
dans lequel chaque groupe de bras (18) possède un axe de rotation respectif distinct de celui de chaque autre groupe de bras (18).

2. Drone selon la revendication 1, dans lequel chaque bras (14) supporte un rotor (4) et/ou est muni d'un pied d'appui pour poser le drone sur une surface.

3. Drone selon la revendication 1 ou 2, dans lequel chaque bras (14) est monté mobile en rotation sur le corps de drone (12) par l'intermédiaire d'un système d'articulation (20) comprenant un ensemble d'articulation (24) configuré pour verrouiller le bras (14) sélectivement dans la position dépliée ou dans la position pliée.

4. Drone selon la revendication 3, dans lequel chaque ensemble d'articulation (24) comprend un premier organe de verrouillage (26) et un deuxième organe de verrouillage (28) configurés pour venir en prise l'un avec l'autre pour empêcher la rotation du bras (14) par rapport au corps de drone (12) et pour se dégager l'un de l'autre pour autoriser la rotation du bras (14) par rapport au drone, et un organe de rappel (30) élastique configuré pour rappeler le premier organe de verrouillage (26) et le deuxième organe de verrouillage (28) en prise l'un avec l'autre.

5. Drone selon la revendication 4, dans lequel le premier organe de verrouillage (26) et le deuxième organe de verrouillage (28) viennent en prise et se dégagent l'un de l'autre par translation axiale selon l'axe de rotation.

6. Drone selon la revendication 4 ou 5, dans lequel un parmi le premier organe de verrouillage (26) et le deuxième organe de verrouillage (28) comprend au moins une dent (32), l'autre comprenant au moins deux crans (34), la dent (32) passant d'un cran (34) à l'autre cran (34) lors de la rotation du bras (14) entre la position dépliée et la position pliée.

7. Drone selon l'une quelconque des revendications 4 à 6, dans lequel chaque ensemble d'articulation (24) comprend une douille (36) tubulaire s'étendant suivant l'axe de rotation, le premier organe de verrouillage (26) étant monté coulissant axialement à l'intérieur de la douille (36) et solidaire en rotation de la douille (36), l'organe de rappel (30) étant logé à l'intérieur de la douille (36) et poussant le premier organe de verrouillage (26) vers le deuxième organe de verrouillage (28).

8. Drone selon l'une quelconque des revendications 4 à 7, comprenant un ensemble d'articulation (24) respectif pour chaque bras (14) du groupe de bras (18).

9. Drone selon l'une quelconque des revendications 4 à 8, dans lequel les bras (14) du groupe de bras (18) sont montés mobile en rotation sur le corps de drone (12) par l'intermédiaire d'un même arbre d'articulation (22) commun s'étendant suivant l'axe de rotation.

10. Drone selon l'une quelconque des revendications précédentes, dans lequel au moins un ou chaque groupe de bras (18) comprend exactement deux bras (14).

11. Drone selon l'une quelconque des revendications précédentes, dans lequel au moins un ou chaque bras (14) d'au moins un ou chaque groupe de bras (18) est écarté du corps de drone (12) en position dépliée et rabattu contre le corps de drone (12) en position pliée.

12. Drone selon l'une quelconque des revendications précédentes, dans lequel au moins un groupe de bras (18) comprend un bras (14) s'étendant longitudinalement le long du corps de drone (12) et vers l'avant du corps de drone lorsque ce bras (14) est en position pliée, et un bras (14) s'étend longitudinalement le long du corps de drone (12) et vers l'arrière du corps de drone lorsque ce bras (14) est en position pliée.

13. Drone selon l'une quelconque des revendications précédentes, dans lequel le drone possède un espace de réception pour recevoir une charge utile, deux bras (14) étant configurés pour s'étendre longitudinalement en encadrant latéralement l'espace de réception (56) lorsque ces bras (14) sont en position pliée.

## Patentansprüche

1. Drehflügler-Drohne mit wenigstens einem Rotor, der von einer Drohnen-Struktur (10) getragen wird, wobei die Drohnen-Struktur (10) aufweist einen Drohnen-Körper (12) und wenigstens zwei Arm-Gruppen (18), wobei jede Arm-Gruppe (18) mehrere Arme (14) aufweist, die am Drohnen-Körper (12) um eine gleiche Drehachse (A) drehbewegbar montiert sind zwischen einer Ausklappposition für den Flug und einer Einklappposition für den Transport,
wobei jede Arm-Gruppe (18) eine jeweilige Drehachse hat, die verschieden ist von jener jeder anderen Arm-Gruppe (18).

2. Drohne gemäß Anspruch 1, wobei jeder Arm (14) einen Rotor (4) hält und/oder ausgestattet ist mit einem Stützfuß zum Aufstellen der Drohne auf eine Fläche.

3. Drohne gemäß Anspruch 1 oder 2, wobei jeder Arm (14) an dem Drohnenkörper (12) drehbewegbar montiert ist mittels eines Gelenksystems (20), das aufweist eine Gelenkeinrichtung (24), die konfiguriert ist zum selektiven Verriegeln des Arms (14) in der Ausklappposition oder in der Einklappposition.

4. Drohne gemäß Anspruch 3, wobei jede Gelenkeinrichtung (24) aufweist ein erstes Verriegelungsorgan (26) und ein zweites Verriegelungsorgan (28), die konfiguriert sind, um miteinander in Eingriff zu kommen zum Verhindern der Drehung des Arms (14) bezüglich des Drohnenkörpers (12) und um außer Eingriff voneinander zu kommen zum Erlauben der Drehung des Arms (14) bezüglich der Drohne, und ein elastisches Rückstellorgan (30), das konfiguriert ist zum Rückstellen des ersten Verriegelungsorgans (26) und des zweiten Verriegelungsorgans (28) in Eingriff miteinander.

5. Drohne gemäß Anspruch 4, wobei das erste Verriegelungsorgan (26) und das zweite Verriegelungsorgan (28) axial entlang der Drehachse in Eingriff miteinander kommen und außer Eingriff voneinander kommen.

6. Drohne gemäß Anspruch 4 oder 5, wobei eines von dem ersten Verriegelungsorgan (26) und dem zweiten Verriegelungsorgan (28) aufweist wenigstens einen Zahn (32), wobei das andere aufweist wenigstens zwei Kerben (34), wobei der Zahn (32) von einer Kerbe (34) zur anderen Kerbe (34) passiert während der Rotation des Arms (14) zwischen der Ausklappposition und der Einklappposition.

7. Drohne gemäß irgendeinem der Ansprüche 4 bis 6, wobei jede Gelenkeinrichtung (24) eine rohrförmige Hülse (36) aufweist, die sich entlang der Drehachse erstreckt, wobei das erste Verriegelungsorgan (26) im Innern der Hülse (36) axialverschiebbar montiert ist und mit der Hülse (36) drehfest ist, wobei das Rückstellorgan (30) im Innern der Hülse (36) untergebracht ist und das erste Verriegelungsorgan (26) in Richtung zu dem zweiten Verriegelungsorgan (28) hin drückt.

8. Drohne gemäß irgendeinem der Ansprüche 4 bis 7, aufweisend eine jeweilige Gelenkeinrichtung (24) für jeden Arm (14) der Arm-Gruppe (18).

9. Drohne gemäß irgendeinem der Ansprüche 4 bis 8, wobei die Arme (14) der Arm-Gruppe (18) an dem Drohnenkörper (12) drehbewegbar montiert sind mittels einer gleichen gemeinsamen Gelenkachse (22), die sich entlang der Drehachse erstreckt.

10. Drohne gemäß irgendeinem der vorhergehenden Ansprüche, wobei wenigstens eine oder jede Arm-Gruppe (18) genau zwei Arme (14) aufweist.

11. Drohne gemäß irgendeinem der vorhergehenden Ansprüche, wobei wenigstens einer oder jeder Arm (14) wenigstens einer oder jeder Arm-Gruppe (18) in der Ausklappposition von dem Drohnen-Körper (12) im Abstand ist und in der Einklappposition gegen den Drohnenkörper (12) geklappt ist.

12. Drohne gemäß irgendeinem der vorhergehenden Ansprüche, wobei wenigstens eine Arm-Gruppe (18) aufweist einen Arm (14), der sich längs entlang des Drohnenkörpers (12) und in Richtung zur Vorderseite des Drohnenkörpers hin erstreckt, wenn dieser Arm (14) in der Einklappposition ist, und einen Arm (14), der sich längs entlang des Drohnenkörpers (12) und in Richtung zur Hinterseite des Drohnenkörpers erstreckt, wenn dieser Arm (14) in der Einklappposition ist.

13. Drohne gemäß irgendeinem der vorhergehenden Ansprüche, wobei die Drohne einen Aufnahmeraum aufweist zum Aufnehmen einer Nutzlast, wobei zwei Arme (14) konfiguriert sind, um sich längs zu erstrecken unter seitlichem Einrahmen des Aufnahmeraums (56), wenn diese Arme (14) in der Einklappposition sind.

## Claims

1. Rotary wing drone comprising at least one rotor carried by a drone structure (10), wherein the drone structure (10) comprises a drone body (12) and at least two groups of arms (18), each group of arms (18) comprising a plurality of arms (14) rotatably mounted on the drone body (12)about the same axis of rotation (A) between a deployed position for flight and a folded position for transport,
**characterized in that** each group of arms (18) has a respective axis of rotation that is separate from that of each other group of arms (18).

2. Drone according to claim 1, wherein each arm (14) carries a rotor (4) and/or is provided with a supporting foot for placing the drone on a surface.

3. Drone according to claim 1 or 2, wherein each arm (14) is rotatably mounted on the drone body (12) via an articulation system (20) which comprises an articulation assembly (24) configured to lock the arm (14) selectively in the deployed or folded position.

4. Drone according to claim 3, wherein each articulation assembly (24) comprises a first locking member (26) and a second locking member (28) configured to engage with one another to prevent the rotation of the arm (14) relative to the drone body (12) and to disengage from one another to allow rotation of the arm (14) relative to the drone, and an elastic return member (30) configured to return the first locking member (26) and the second locking member (28) into engagement with one another.

5. Drone according to claim 4, wherein the first locking member (26) and the second locking member (28) engage with, and disengage from, each other by axial translation along the axis of rotation.

6. Drone according to claim 4 or 5, wherein either the first locking member (26) or the second locking member (28) comprises at least one tooth (32), the other locking member comprising at least two notches (34), the tooth (32) passing from one notch (34) to the next notch (34) during the rotation of the arm (14) between the deployed position and the folded position.

7. Drone according to any one of the claims 4 to 6, wherein each articulation assembly (24) comprises a tubular bushing (36) extending along the axis of rotation, the first locking member (26) being mounted to slide axially inside the bushing (36) and to rotate integrally with the bushing (36), the return member (30) being housed inside the bushing (36) and pushing the first locking member (26) towards the second locking member (28).

8. Drone according to any one of the claims 4 to 7, comprising a respective articulation assembly (24) for each arm (14) of the group of arms (18).

9. Drone according to any one of the claims 4 to 8, wherein the arms (14) of the group of arms (18) are rotatably mounted on the drone body (12) via a single articulation shaft (22) extending along the axis of rotation.

10. Drone according to any one of the preceding claims, wherein at least one or each group of arms (18) comprises exactly two arms (14).

11. Drone according to any one of the preceding claims, wherein at least one, or each, arm (14) of at least one, or each, group of arms (18) is spaced apart from the drone body (12) in the deployed position and folded against the drone body (12) in the folded position.

12. Drone according to any one of the preceding claims, wherein at least one group of arms (18) comprises an arm (14) extending longitudinally along the drone body (12) and towards the front of the body of a drone when the arm (14) is in the folded position, and an arm (14) extending longitudinally along the drone body (12) and towards the rear of the drone body when the arm (14) is in the folded position.

13. Drone according to any one of the preceding claims, wherein the drone has a receiving space to receive a payload, wherein two arms (14) are configured to extend longitudinally to frame the receiving space (56) laterally when these arms (14) are in the folded position.
